# EUROPEAN PATENT APPLICATION

(11) **EP 2 672 371 A2**
(43) Date of publication of application: **11.12.2013**
(21) Application number: 13170941.2
(22) Date of filing: 06.06.2013
(51) Int. Cl.: G06F 3/044

(54) **Touch panel**

(30) Priority: 06.06.2012 TW 101120262; 27.05.2013 TW 102118642
(71) Applicant: Wintek Corporation, 42760 Taichung City (TW)
(72) Inventor: Tsai, Di-Shing, 436 Taichung City (TW); Liu, Wen-Chieh, 510 Changhua County (TW); Ho, Pei-Yi, 423 Taichung City (TW); Huang, Ping-Wen, 406 Taichung City (TW); Yu, Peng-Chih, 880 Penghu County (TW)
(74) Representative: Chew, Kwan Chong Daniel

(57) **Abstract**

A touch panel including a substrate, a plurality of sensing units, a decoration layer, first signal lines, second signal lines, and a conductive component is provided. The substrate has an operation region and a periphery region surrounding the operation region. The sensing units are located within the operation region for sensing a coordinate of a touch point. The decoration layer is located within the periphery region. The first and second signal lines and the conductive component are located within the periphery region and disposed on the decoration layer. The conductive component has a widen portion located between the first and second signal lines, and the widen portion has a line width greater than those of the other portions of the conductive component.

## Description

### BACKGROUND OF THE INVENTION

### Field of the Invention

The present invention relates to a touch panel. More particularly, the present invention relates to a touch panel with a decoration layer.

### Description of Related Art

Input devices of many information products have been changed from conventional keyboards and mice to touch apparatuses so as to comply with requirements for convenience, miniaturization, and being user-friendly. The touch apparatuses can be assembled to various flat panel displays to equip the same with functions of both displaying images and inputting information of operation. Among the current touch apparatuses, capacitive touch panels and resistive touch panels are most common. Particularly, the uses prefer the capacitive touch panels as the users merely need to slightly touch the panel surface to input the operation information.

In general, in either capacitive touch panels or resistive touch panels, a layer of a transparent conductive material, such as indium tin oxides (ITO), is included as the sensing conductive film. Hence, the fabrication of the transparent conductive material becomes one factor affecting the quality of the touch panels.

In order to obtain the ideal conductive properties, high temperature processes are commonly employed to form the transparent conductive film. However, other components of the touch panel are less tolerant to the high temperature, and high temperature processes may deteriorate the product quality. Hence, the quality of the conductive film may be compromised when considering the quality of other components of the touch panels.

### SUMMARY OF THE INVENTION

The present invention related to a touch panel, which provides better quality and lessen the damages of the large-area metal lines during the manufacturing processes.

The present disclosure provides a touch panel including a substrate, a plurality of sensing units, a decoration layer, first signal lines, second signal lines, and a conductive component. The substrate has an operation region and a periphery region surrounding the operation region. The sensing units are located in the operation region for sensing a coordinate of a touch point. The decoration layer is located in the periphery region. The first signal lines, the second signal lines and the conductive component are located in the periphery region and disposed on the decoration layer. The first signal lines are connected to a portion of the plurality of the sensing units, while the second signal lines are connected to the other portion of the plurality of the sensing units. One end of each of the first signal lines is connected to corresponding one of the sensing units, while the other end of each of the first signal lines is located in a bonding area of the periphery region. One end of each of the second signal lines is connected to corresponding one of the sensing units, while the other end of each of the plurality of the second signal lines is located in the bonding area of the periphery region. The conductive component has a widen portion located between the first and second signal lines. A line width of the widen portion is greater that the other portions of the conductive component.

The present disclosure provides a touch panel, comprising: a substrate, having an operation region and a periphery region arranged in at least one side of the operation region; a plurality of sensing units, located within the operation region for sensing a coordinate of a touch point; a decoration layer, located within the periphery region; and a conductive component, located within the periphery region and disposed on the decoration layer, wherein the conductive component has a widen portion, and the widen portion has a line width greater than those of other portions of the conductive component, and wherein when choosing a selected region having an area of 0.4mmx 0.4mm from the widen portion of the conductive component, the selected region includes at least one blank region having no metal pattern.

According to one embodiment, one end of the conductive component is located in the bonding area of the periphery region for connecting to a ground signal.

According to one embodiment, when choosing a selected region having an area of 0.4mm×0.4mm from the periphery region, the selected region includes at least one blank region having no metal pattern. For example, the line width of the widen portion is equivalent to or larger than 0.5mm, and the widen portion has at least one opening. The at least one opening is an open-type opening or a close-type opening.

According to one embodiment, a material of the decoration layer is a photoresist material.

According to one embodiment, the decoration layer is disposed on the substrate and has a lower first side neighboring to the substrate and an upper second side opposite to the first side, and the first and second signal lines and the conductive component are located on the second side of the decoration layer.

According to one embodiment, the sensing units includes a plurality of first sensing units and a plurality of second sensing units arranged alternately, each first sensing unit and each second sensing units include at least one sensing electrode respectively, and a material of the sensing electrode includes a transparent conductive material.

According to one embodiment, the touch panel further has an insulating layer over the substrate to electrically insulate the plurality of the sensing units, wherein the insulating layer covers the plurality of the first signal lines, the plurality of the second signal lines and the conductive component. In addition, the touch panel also has a floating transparent conductive pattern disposed on the insulating layer and over the conductive component.

As embodied and broadly described herein, for the touch panel of this invention, one or more openings are formed in the large-area transmitting lines, such as the conductive component. By doing so, the large-area transmitting lines are less easily damaged under the high temperature conditions of the manufacturing processes, so that the obtained touch panel offers excellent quality.

In order to make the aforementioned and other objects, features and advantages of the present invention comprehensible, embodiments accompanied with figures are described in detail below. It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

Figure 1 is a schematic top view of a touch panel according to an embodiment of this disclosure.

Figure 2 is a schematic cross-sectional view of Figure 1 along the line I-I'.

Figure 3 is a partial enlarged view of the region E in Figure 1.

Figures 4A to 4F illustrate various designs of the opening in the widen portion.

### DESCRIPTION OF EMBODIMENTS

The present invention is described below in detail with reference to the accompanying drawings, and the embodiments of the present invention are shown in the accompanying drawings. However, the present invention can also be implemented in a plurality of different forms, so it should not be interpreted as being limited in the following embodiments. Actually, the following embodiments are intended to demonstrate and illustrate the present invention in a more detailed and completed way, and to fully convey the scope of the present invention to those of ordinary skill in the art. In the accompanying drawings, in order to be specific, the size and relative size of each layer and each region may be exaggeratedly depicted.

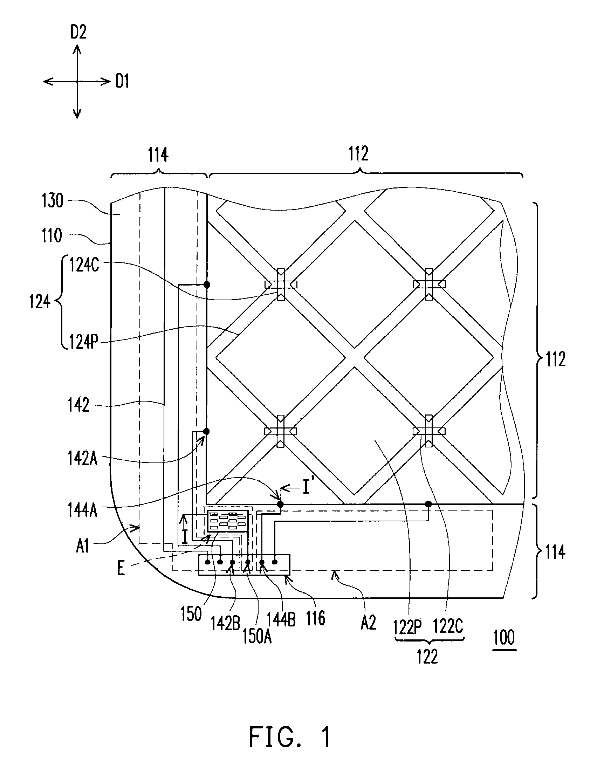

Figure 1 is a schematic top view of a touch panel according to an embodiment of this disclosure. Referring to Figure 1, the touch panel 100 includes a substrate 110, a plurality of first sensing units 122, a plurality of second sensing units 124, a decoration layer 130, a plurality of first signal lines 142, a plurality of second signal lines 144, and a conductive component 150. Though not limited by the following descriptions, the conductive component 150 is preferably connected to a ground voltage. It is noted that Figure 1 illustrates the allocation area of the components of the touch panel 100 over the substrate 110, instead of the stacking relationship of these components. Additionally, for the convenience of the descriptions, Figure 1 only depicts portions of the first sensing units 122, the second sensing units 124, the first signal lines 142 and the second signal lines 144.

The substrate 110 has an operation region 112 and a periphery region 114 arranged in at least one side of the operation region 112. Preferably, the periphery region 114 is surrounding the operation region 112. In general, the first sensing units 122 and the second sensing units 124 within the operation region 112 are sensing devices of the touch panel 100, while the first signal lines 142 and the second signal lines 144 are distributed over the periphery region 114 surrounding the operation region 112.

In this embodiment, the first sensing units 122 and the second sensing units 124 are alternately arranged for sensing a coordinate of a touch point. In details, the first sensing units 122 may be composed of a plurality of sensing electrodes 122P and a plurality of connection lines 122C connecting the sensing electrodes 122P in series along the first direction D1. The second sensing units 124 may be composed of a plurality of sensing electrodes 124P and a plurality of connection lines 124C connecting the sensing electrodes 124P in series along the second direction D2. The first direction D 1 is perpendicular to the second direction D2.

In this embodiment, the touch panel 100 uses the sensing series extending along different directions as sensing units for fulfilling the sensing functions. In other embodiments, strip shaped sensing electrodes may be used as sensing units and applicable for the touch panel 100. The sensing series functioning as the sensing units as illustrated in Figure 1 are merely exemplary and are not used to limit the scope of this disclosure. Moreover, for maintaining the proper transparency of the touch panel 100, the sensing electrodes 122P, 124P may be fabricated by transparent conductive material, such as indium tin oxides or indium zinc oxides etc..

The decoration layer 130, the first signal lines 142, the second signal lines 144 and the conductive component 150 are located in the periphery region 114. In general, the decoration layer 130 provides the light-shielding function and behaves as the border frame around the operation region 112 to cover the first signal lines 142, the second signal lines 144 and the conductive component 150. By doing so, the user will not see the first signal lines 142, the second signal lines 144 and the conductive component 150 when using the touch panel 100, which is beneficial for enhancing the presentation of the touch panel 100.

In details, the periphery region 114 has a bonding area 116 for connecting the touch panel 100 to the external circuits or chips. That is, the external circuits or chips for controlling and driving the touch panel 100 are connected to the bonding area 116. Herein, the first signal lines 142 and the second signal lines 144 are transmission lines for respectively connecting the first sensing units 122 and the second sensing units 124 to the external circuits or chips. One end 142A of each first signal line 142 is connected to one of the first sensing units 122, while the other end 142B is located in the bonding area 116. One end 144A of each second signal line 144 is connected to one of the second sensing units 124, while the other end 144B is located in the bonding area 116.

As shown in Figure 1, the plurality of the first signal lines 142 is distributed over the first signal-line region A1, while the plurality of the second signal lines 144 is distributed over the second signal-line region A2. The conductive component 150 is disposed between the first signal-line region A1 and the second signal-line region A2. One end 150A of the conductive component 150 is disposed in the bonding area 116 of the periphery region 114. The conductive component 150 is preferably connected to a ground signal, for example. The conductive component 150 may be connected to the external circuits or chips that are connected with the first signal lines 142 and the second signal lines 144 or be connected to other external circuits or chips. That is, the external circuits or chips that are connected to the conductive component 150 may be different from the external circuits or chips that are connected with the first signal lines 142 and the second signal lines 144.

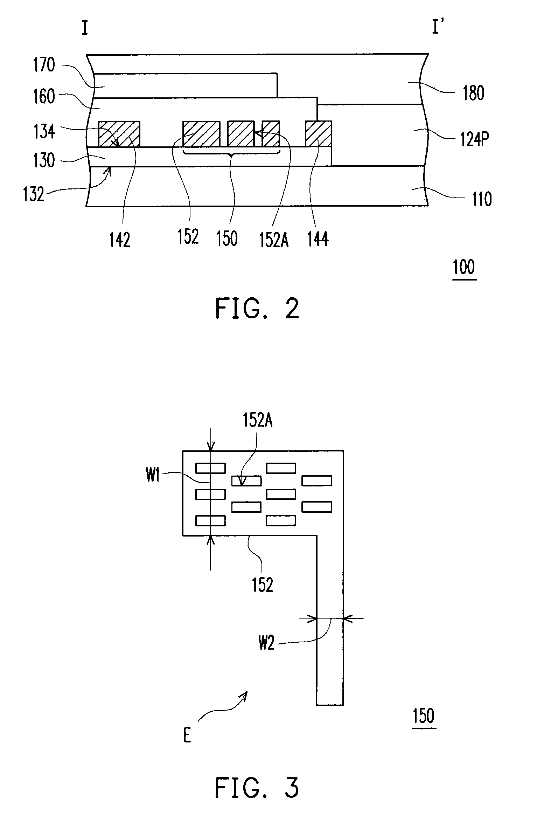

According to this embodiment, a selected region having the area of 0.4mm× 0.4mm is arbitrarily selected from the periphery region 114 of the touch panel 100. Such selected region may include at least one of the conductive component 150, the first signal lines 142 and the second signal lines 144, and at least one blank region having no metal lines. During the manufacturing processes of the first signal lines 142, the second signal lines 144 and the conductive component 150 by using the metal material(s), at least one blank region is preserved without setting any metal material thereon within the selected region of 0.4mm×0.4mm arbitrarily selected from the periphery region 114 of the touch panel 100. Figure 2 is a schematic cross-sectional view of Figure 1 along the line I-I'. Referring to Figures 1 and 2, the touch panel 100 includes an insulating layer 160, a floating transparent conductive pattern 170 and a protection layer 180.

In Figure 2, the insulating layer 160 covers the first signal lines 142, the second signal lines 144 and the conductive component 150. In the operation region 112, the insulating layer 160 functions to electrically insulate the first sensing units 122 and the second sensing units 124. Laterally, the connection lines 122C of the first sensing units 122 are electrically isolated from the connection lines 124C of the second sensing unit 124 by the insulating layer 160.

The floating transparent conductive pattern 170 is disposed on the insulating layer 160 and disposed above the conductive component 150. During the manufacturing process of either the sensing electrodes 122P of the first sensing units 122 or the sensing electrodes 124P of the second sensing units 124, the floating transparent conductive pattern 170 may be simultaneously formed. The protection layer 180 covers over the substrate 110, so that the first sensing units 122, the second sensing units 124, the decoration layer 130, the first and second signal lines 142, 144, the conductive component 150, the insulating layer 160 and the floating transparent conductive pattern 170 are located between the substrate 110 and the protection layer 180.

From Figure 2, the decoration layer 130 is disposed on the substrate 110 and has a lower first side 132 in contact with the substrate 110 and an upper second side 134 opposite to the first side 132. The first and second signal lines 142, 144 and the conductive component 150 are located on the second side 134 of the decoration layer 130. The floating transparent conductive pattern 170 is disposed above the first and second signal lines 142, 144 and the conductive component 150. The manufacturing processes of the touch panel 100 may include forming the decoration layer 130 on the substrate 110 and in the periphery region 112 using the photoresist material, followed by forming the first and second signal lines 142, 144 and the conductive component 150 using the metal material(s), and then forming the sensing electrodes 122P of the first sensing units 122, the sensing electrodes 124P of the second sensing units 124 and the floating transparent conductive pattern 170 using the transparent conductive material, for example.

In general, the sensing electrodes 122P of the first sensing units 122 and the sensing electrodes 124P of the second sensing units 124 are preferably fabricated under high temperature conditions for ideal conductive properties. However, if the decoration layer 130 is made of the photoresist material, the high temperature conditions may cause the occurrence of swelling or gassing in the photoresist material. Even the occurrence of swelling or gassing may not seriously affect the masking function of the decoration layer 130, the resultant stress could damages to the conductive component 150 of the decoration layer 130 and the first and second signal lines 142, 144. Especially, the wider the lines are, higher possibilities of damages the lines have.

In this embodiment, the stress damages may be alleviated through the area arrangement of the conductive component 150 and the first and second signal lines 142, 144. As described above, the periphery region 114 of the touch panel 100 is designed, when a selected region having the area of 0.4mm×0.4mm is arbitrarily selected from the periphery region 114 of the touch panel 100, at least one blank region is preserved without setting any metal material thereon within the selected region. Under such layout design, the conductive component 150 and the first and second signal lines 142, 144 may be less easily broken or fractured even under the stress resultant from swelling or gassing of the photoresist material. On the contrary, if the metal material fully covers the region having the area of 0.4mm×0.4mm or larger area, the metal material could easily explode under the stress resultant from swelling or gassing of the photoresist material. Hence, by using the layout design, the damage possibility of the metal device can be lowered and the quality and yield of the touch panel 100 can be enhanced.

Figure 3 is a partial enlarged view of the region E in Figure 1. Referring to Figures 1-3, the conductive component 150 has a widen portion 152. The widen portion 152 has a line width W1 larger than the line width W2 of the other regions of the conductive component 150. The line width W1 of the widen portion 152 may be equal to or larger than 0.5 mm, for example. Herein, the widen portion 152 has at least one opening 152A, which allows at least one blank region preserved without setting any metal material thereon within the selected region of 0.4mm×0.4mm arbitrarily selected from the periphery region 114 of the touch panel 100. That is, the opening 152A may be regarded as the blank region. Additionally, the region between any adjacent two parts of the conductive component 150 and the first and second signal lines 142, 144 may be regarded as the aforementioned blank region.

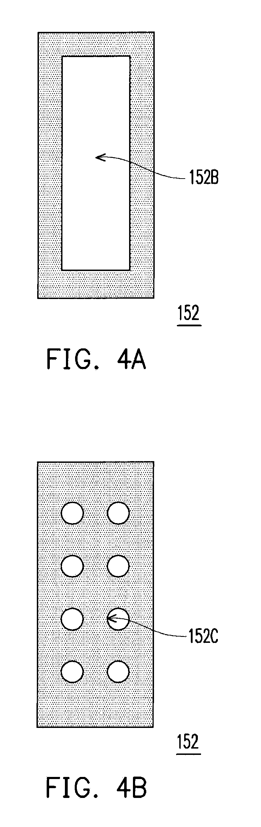

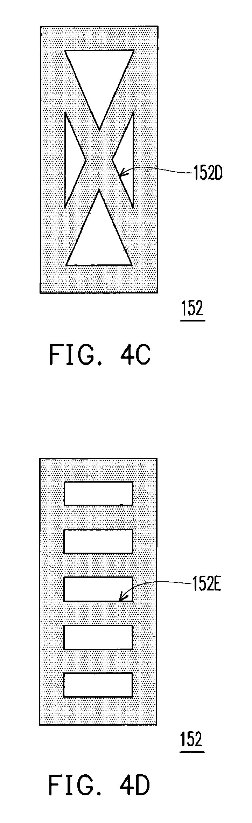

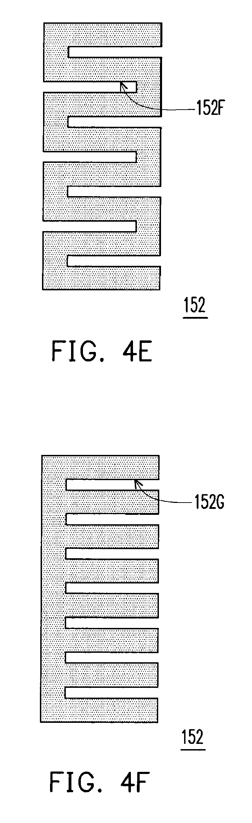

In Figure 3, a plurality of the openings 152A is shown and has a rectangular shape. However, the shape or quantity of the openings is not limited by this embodiment. Figures 4A to 4F illustrate various designs of the opening in the widen portion. In Figure 4A, the widen portion 152 has one rectangular opening 152B. In Figure 4B, the widen portion 152 has a plurality of round openings 152C. In Figure 4C, the widen portion 152 has a plurality of triangular openings 152D. In Figure 4D, the widen portion 152 is designed to have a grating pattern with a plurality of rectangular openings 152E. The above examples describe close-type openings. However, the pattern of Figure 4D may be further modified with open-type openings. As shown in Figure 4E, the widen portion 152 has a plurality of open-type rectangular openings 152F so that the widen portion 152 has a wave-form pattern. In Figure 4F, the widen portion 152 has a plurality of open-type rectangular openings 152G so that the widen portion 152 has a comb pattern. It is noted that the shape or design of the widen portion or the opening(s) may be further modified based on the process requirements and product designs, and other types of designs or different forms of openings are included within the scope of this invention.

In summary, during fabrication of the metal device over the decoration layer using the metal material, the layout or the area of the metal material may be modified so that the metal material does not fill up the arbitrarily selected region of a specific area. Such design assures the metal material no to be formed with too large layout area and prevent the metal material from being damaging by the stress that are generated during the fabrication of other devices. According to the embodiment(s) of this invention, the quality and yield of the touch panel can be significantly improved.

## Claims

1. A touch panel (100), comprising:
a substrate (110), having an operation region (112) and a periphery region (114) surrounding the operation region (112),
a plurality of sensing units (122, 124), located within the operation region (112) for sensing a coordinate of a touch point;
a decoration layer (130), located within the periphery region (114);
a plurality of first signal lines (142), located within the periphery region (114) and disposed on the decoration layer (130), wherein the plurality of the first signal lines (142) are connected to a portion of the plurality of the sensing units (122, 124), one end (142A) of each of the plurality of the first signal lines (142) is connected to corresponding one of the plurality of the sensing units (122, 124), while the other end (142B) of each of the plurality of the first signal lines (142) is located in a bonding area (116) of the periphery region (114);
a plurality of second signal lines (144), located within the periphery region (114) and disposed on the decoration layer (130), wherein the plurality of the second signal lines (144) are connected to the other portion of the plurality of the sensing units (122, 124), one end (144A) of each of the plurality of the second signal lines (144) is connected to corresponding one of the plurality of the sensing units (122, 124), while the other end (144B) of each of the plurality of the second signal lines (144) is located in the bonding area (116) of the periphery region (114); and
a conductive component (150), located within the periphery region (114) and disposed on the decoration layer (130), wherein the conductive component (150) has a widen portion (152) located between a first signal-line region (A1) having the plurality of the first signal lines (142) and a second signal-line region (A2) having the plurality of the second signal lines (144), and the widen portion (152) has a line width (W1) greater than those of other portions of the conductive component (150).

2. The touch panel of claim 1, wherein one end of the conductive component (150) is located in the bonding area (116) of the periphery region (114) for connecting to a ground signal.

3. The touch panel of claim 1, wherein when choosing a selected region having an area of 0.4mm×0.4mm from the periphery region (114), the selected region includes at least one blank region having no metal pattern.

4. The touch panel of claim 3, wherein the line width of the widen portion (152) is equivalent to or larger than 0.5mm, and the widen portion (152) has at least one opening (152A, 152B, 152C, 152D, 152E, 152F, 152G) that defines the at least one blank region.

5. The touch panel of claim 4, wherein the at least one opening (152A, 152B, 152C, 152D, 152E, 152F, 152G) is an open-type opening or a close-type opening.

6. The touch panel of claim 3, wherein a region between any adjacent two of the conductive component (150) and the first and second signal lines (142, 144) defines the at least one blank region.

7. The touch panel of claim 1, wherein a material of the decoration layer (130) is a photoresist material.

8. The touch panel of claim 1, wherein the decoration layer (130) is disposed on the substrate (110) and has a lower first side (132) neighboring to the substrate (110) and an upper second side (134) opposite to the first side (132), and the first and second signal lines (142, 144) and the conductive component (150) are located on the second side (134) of the decoration layer (130).

9. The touch panel of claim 1, wherein the plurality of the sensing units (122, 124) includes a plurality of first sensing units (122) and a plurality of second sensing units (124) arranged alternately, each of the plurality of the first sensing units (122) and the plurality of the second sensing units (124) includes at least one sensing electrode (122P, 124P), and a material of the at least one sensing electrode (122P, 124P) includes a transparent conductive material.

10. The touch panel of claim 1, further comprising an insulating layer (160) over the substrate (110) to electrically insulate the plurality of the sensing units (122, 124), wherein the insulating layer (160) covers the plurality of the first signal lines (142), the plurality of the second signal lines (144) and the conductive component (150).

11. The touch panel of claim 10, further comprising a floating transparent conductive pattern (170) disposed on the insulating layer (160) and over the conductive component (150).

12. A touch panel (100), comprising:
a substrate (110), having an operation region (112) and a periphery region (114) arranged in at least one side of the operation region (112);
a plurality of sensing units (122, 124), located within the operation region (112) for sensing a coordinate of a touch point;
a decoration layer (130), located within the periphery region (114); and
a conductive component (150), located within the periphery region (114) and disposed on the decoration layer (130), wherein the conductive component (150) has a widen portion (152), and the widen portion (152) has a line width (W1) greater than those of other portions of the conductive component (150), and wherein when choosing a selected region having an area of 0.4mm×0.4mm from the widen portion (152) of the conductive component (150), the selected region includes at least one blank region having no metal pattern.

13. The touch panel of claim 12, wherein one end of the conductive component (150) is located in the bonding area of the periphery region (114) for connecting to a ground signal.

14. The touch panel of claim 12, wherein the line width of the widen portion (152) is equivalent to or larger than 0.5mm, and the widen portion (152) has at least one opening (152A, 152B, 152C, 152D, 152E, 152F, 152G) that defines the at least one blank region.

15. The touch panel of claim 14, wherein the at least one opening (152A, 152B, 152C, 152D, 152E, 152F, 152G) is an open-type opening or a close-type opening.

16. The touch panel of claim 12, wherein a material of the decoration layer (130) is a photoresist material.

17. The touch panel of claim 12, wherein the decoration layer (130) is disposed on the substrate (110) and has a lower first side (132) neighboring to the substrate (110) and an upper second side (134) opposite to the first side (132), and the conductive component (150) are located on the second side (134) of the decoration layer (130).

18. The touch panel of claim 12, wherein the plurality of the sensing units (122, 124) includes a plurality of first sensing units (122) and a plurality of second sensing units (124) arranged alternately, each of the plurality of the first sensing units (122) and the plurality of the second sensing units (124) includes at least one sensing electrode (122P, 124P), and a material of the at least one sensing electrode (122P, 124P) includes a transparent conductive material.

19. The touch panel of claim 12, further comprising an insulating layer (160) over the substrate (110) to electrically insulate the plurality of the sensing units (122,124), wherein the insulating layer (160) covers the conductive component (150).

20. The touch panel of claim 19, further comprising a floating transparent conductive pattern (170) disposed on the insulating layer (160) and over the conductive component (150).
